# EUROPEAN PATENT APPLICATION

(11) **EP 4 088 584 A1**
(43) Date of publication of application: **16.11.2022**
(21) Application number: 22171497.5
(22) Date of filing: 04.05.2022
(51) Int. Cl.: A23J 1/00, A23L 33/18, A23L 33/195, C07K 4/08

(54) **COMPOSITION BASED ON SPIRULINA EXTRACT AND CORRESPONDING PREPARATION METHOD**

(30) Priority: 13.05.2021 IT 202100012377
(71) Applicant: Kaipros S.r.l., 34077 Ronchi dei Legionari (GO) (IT)
(72) Inventor: Bosco, Marco, 34072 Gradisca d'Isonzo (GO) (IT)
(74) Representative: Petraz, Davide Luigi

(57) **Abstract**

Composition based on stabilized spirulina extract comprising phycobiliproteins and a titrated content of a fraction of natural oligopeptides natively present in the spirulina having a molecular weight lower than 2500 Dalton.

## Description

### FIELD OF THE INVENTION

The embodiments described here concern a composition based on spirulina extract and the corresponding preparation method.

### BACKGROUND OF THE INVENTION

It is known that spirulina alga is a food source rich in proteins, most commonly consumed as a food supplement in various conformations obtained from the entire dried biomass. It has been recognized as having supporting nutritional properties with a restorative, antioxidant, immunoregulatory, antibacterial, antiviral (anti-Herpes), anti-inflammatory, antihypertensive and detoxifying action, and has also shown positive effects in the treatment of allergic manifestations (e.g., allergic rhinitis). Some of these properties have been attributed to the presence of phytocompounds with which the alga is rich; among them the large quantity of proteins, carotenoids, polyunsaturated fatty acids, glycolipids, polysaccharides (spirulan), vitamins and mineral salts stand out.

It is known that spirulina's proteomic profile is extremely rich and has hundreds of proteins. Among these, the most studied and characterized are the phycobiliproteins, which comprise phycocyanin A, phycocyanin C and phycoerythrin. Numerous *in vitro* and *in vivo* studies have shown the anti-inflammatory, antibacterial, hepatoprotective, nephroprotective, cardioprotective, antioxidant and radical scavenger properties attributable to phycocyanins. Little information is reported in literature regarding the other protein components present in spirulina biomass.

The analysis of the protein profile that is found in aqueous extracts of spirulina shows the presence of over 500 different proteins in which the largest fraction consists of phycocyanins, which can constitute up to 50% of the total. Most of these peptides, which are characterized by electrophoresis, show variable molecular weights in the range of 20-100 KDa and mainly (about 75%) are grouped in the ranges 20-25 KDa and 35-60 KDa.

It is known that spirulina can be a useful protein source for the preparation of new bioactive oligopeptides. Their preparation generally involves an enzymatic hydrolysis, *in vitro,* of the algal proteins through the use of exogenous digestive enzymes. From this process, a complex mixture of oligopeptides artificially originates, which must be separated, characterized and tested for their metabolic properties. Some of them have shown antihypertensive activity with a mechanism associated with the inhibition of ACE (Angiotensin Converting Enzyme). From studies concerning the structure-property correlation it has emerged that peptides with antihypertensive activity preferentially contain Tyr (tyrosine), Phe (phenylalanine), Trp (tryptophan) and/or Pro (proline) at the C-terminal, while other studies suggest that the presence of Leu (leucine), Ile (isoleucine) and Val (valine) can increase the ACE inhibitor potential.

Applicant has found that the hydrolytic action of the endogenous proteases that are contained in spirulina extracts reduces the content of natural oligopeptides, already present in the alga, in a few days.

Document WO-A-2010/115149 describes a preparation with an anti-inflammatory action which consists of a fraction of the extract from Aphanizomenon flos-aquae or from spirulina devoid of phycocyanins; in particular the phytocompounds contained in the fraction described have a molecular weight (MW) <100 KDalton and progressively MW <50 KDa, MW <10 kDa, MW <5KDa. The fractions described here are obtained by ultrafiltration, discarding the total phycobiliproteins that are present in the aqueous extract in multi-unit multi-complexes with MW> 100 kDa. The fraction described has an anti-inflammatory effect due to a lipooxygenase inhibition mechanism. The evidence of anti-inflammatory activity was verified by *in vitro* and *in vivo* tests using a fraction, called "fraction 1117", which is the ultrafiltration permeate with a cut-off of 50 KDa on the extract from a generic spirulina. This document does not attribute the anti-inflammatory action to a particular metabolite or to a specific class of molecules, but to the extract including any algal metabolite having, as the only characterizing element, a molecular weight lower than 100 KDa. The fractions of extract described in the above document are not titrated, nor are specific values set with respect to any molecule or class of bioactive molecules except to define the maximum limit for the content in phycocyanin, which must not exceed 5 mg/L. Furthermore, this document does not report any antihypertensive activity or in general on the cardiovascular system.

Food supplementation with whole spirulina has been shown to have beneficial effects on the cardiovascular system both in humans and on animal models. In particular, according to some studies, it appears that supplementation, for at least 6 weeks, with high doses of spirulina, from 4.5 to 8.0 g/day, induces a statistically significant lowering of blood pressure and blood levels of cholesterol and triglycerides; lower doses of alga, from 1 to 4.2 g/day, have effects on triglycerides and cholesterol, but no data on blood pressure are reported. However, other studies are conflicting on the extent of the effects and on the effective doses, highlighting the limits in the reproducibility of the benefits that can be attributed to generic spirulina samples.

The benefits to the cardiovascular system support, in particular, the effectiveness of food supplementation in relation to sporting activity, as also reported by specific scientific studies. For example, it has been observed in a model on rats that a diet with dried spirulina supplement induced vasodilation and increased elasticity of the blood vessels, associated with the increased availability of nitric monoxide. These effects are significantly enhanced in guinea pigs subjected to a controlled physical training cycle, from which it is concluded that training and the consumption of spirulina as a food supplement are synergistic in their effects on the vascular system. The effectiveness is attributed to the antiradical and antioxidative effect of phycocyanin and, generally, of all the water-soluble and fat-soluble components of spirulina without specifying which ones or quantifying their content or effective dose. In general, therefore, physical training in association with a diet supplemented with spirulina increases muscle performance and protects against muscle damage and the effects of oxidative stress and inflammatory processes.

In humans too, it has been observed that a diet supplemented with spirulina (6÷7.5 g/day for 3÷4 weeks) modifies the blood values of some metabolites (e.g., glutathione, malondialdehyde, etc.) correlated to muscle fatigue due to workout and increases resistance and muscle performance, decreases the speed of sugar oxidation and increases the fat oxidation speed.

Document FR-A-3.055.089 describes some multivitamin compositions containing purified phycocyanin (at high doses:> 200 mg/L) or only the water-soluble fractions of spirulina, in association with other non-vegetable active ingredients, expressly dedicated to supplementation to support sports activities, to limit damage from oxidative stress to the cardiovascular and muscular systems.

It can be seen, in general terms, that in the state of the art spirulina alga is used as it is, in dried form, and is not subjected to any selection based on its metabolic profile. Nor is information given on which molecular components are functional to the effects observed, with the exception of phycocyanin, to which an anti-inflammatory action is attributed.

Furthermore, Applicant has highlighted the great variability in the content of some classes of peptides contained in different samples of spirulina even if cultivated according to the strictest health criteria. Therefore, the nutritional effects observed cannot be guaranteed for all generic spirulina productions, such as those available on the market. Moreover, the doses of dried spirulina that prove effective are very high and raise problems of "acceptability of use"; consider the fact that the minimum dose that has shown antihypertensive effects (4.5 g/day, 6 weeks) would correspond to 11÷15 tablets per day. However, the maximum dose commonly recommended for spirulina-based food supplements is 2÷3 grams of alga per day.

The problem therefore arises of providing the consumer with a product that proves effective even with lower doses, more easily acceptable and that is useful, for example, to support the functionality of the cardiovascular system and to prevent the effects on it associated with age, with a sedentary lifestyle or bad eating habits, or to support sports activity, enhancing the phytonutrients of spirulina more effectively.

Document US-A-2020/155642 describes the purification of microalgae extracts to obtain purified fractions of extract containing phycobiliproteins (FBPs), characterizing their composition with gel-electrophoresis. This document describes an extraction process that requires extending the infusion for more than 60 hours in order to have the complete release of the phycobiliproteins.

The purification of the FBPs takes place using separation techniques such as tangential filtration and dialysis, which have the effect of removing and discarding the low MW oligopeptide fractions. The essential components of these mixtures are eleven FBPs with well-defined MW, comprised in the range 13417 - 45578 Dalton. The purified extract is the permeate from the microgels in which the biomass is encapsulated. No information or relevance is given on any other possible algal metabolites contained in it. The products described in this document are purified fractions of spirulina extracts, that is, fractions enriched in phycobiliproteins, but no information is given on the presence or possible content of oligopeptides. Furthermore, this document does not provide experimental evidence to support the efficacy of the preparations described here for the applications mentioned in particular in Table 1. From this document, therefore, it is not possible to understand in which cases and with which methods and doses the preparations described are possibly effective for each of these applications. Moreover, in example 5 of this document, the evaluation of the effectiveness of the use of the preparations described in support of sporting activity is associated exclusively with the subjective sensations of two people who play sports, without the support of any measurable and objective biometric parameter. In example 5 the subjects take at least 250 mg of purified PPES daily in the form of a lyophilized powder, but this value does not provide precise information on the quantity of active ingredients (e.g., FBPs) as their content is very variable depending on the different realizations proposed (in some cases the protein content is from 40 to 90% by dry weight, in other cases the FBPs are completely removed from the extract).

The publication Manirafasha, E. et al, doi: 10.1016/J.BEJ.2016.01.025 focuses on optimizing the production of high-purity phycocyanin and the technologies suggested for the processes of working spirulina are directed to this purpose. Each purification process described in this document is intended precisely to modify the native composition of the extract, enriching it in the metabolite of interest and discarding the others.

The publication Ruperto, B. et al, doi: 10.1007/S10337-012-2200-1 focuses on maximizing the yields and efficiency in the purification of phycocyanin and the operating conditions are intended for this purpose. This document does not provide information on the temperature and time of extraction and processing of the extract; however, temperature and time are factors that deeply affect the composition of the extract as found by Applicant.

The publication Hsieh-Lo, M. et al, doi: 10.1016/j.algal.2019.101600 analyzes the solutions that have been proposed to increase the stability of FBPs against denaturation, in particular through the use of anionic micelles with sodium dodecyl sulfate (SDS).

The publication C. C. Moraes et al, doi: 10.1590/S0104-66322011000100006 identifies the most efficient method for extracting phycocyanin in the use of ultrasound in the presence of glass spheres. However, no information is provided on the extraction of oligopeptides nor are they quantified. The extraction methods described in this document provide long incubation times, for example for 24 hours at room temperature which, however, Applicant has found to be unsuitable for preserving the integrity of the oligopeptides.

There is therefore a need to perfect a composition, an algal extract based on spirulina and a corresponding preparation method which can overcome at least one of the disadvantages of the state of the art.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the present invention or variants to the main inventive idea.

In accordance with some embodiments, there is provided a composition based on stabilized spirulina extract comprising phycobiliproteins and a titrated content of a fraction of natural oligopeptides having a molecular weight lower than 2500 Dalton, wherein said phycobiliproteins and said natural oligopeptides are natively present in the spirulina, wherein the total content of the fraction of oligopeptides, referred to a quantity of bound Tyr contained in the fraction of oligopeptides and measured by means of the NMR method, is higher than 2.0 µmoles per daily dose administered.

Applicant has found that the effectiveness of spirulina extracts is not given only by phycocyanin but, surprisingly, by the synergistic combination of phycobiliproteins and oligopeptides. The compositions, formulations, preparations and preparation methods set forth here, as well as, favorably, the operating conditions of the processing and selection of the biomass, are able to achieve effective, reliable, repeatable and synergistic quantitative values of phycobiliproteins and oligopeptides in the compositions and extracts of the present invention.

The spirulina extract described here is favorably stabilized, that is, it has been subjected to a production method or mode able to prevent any chemical, physical or enzymatic process that would reduce the content of oligopeptides and/or phycobiliproteins over time, compared to the quantity in which they are natively present in the dried alga.

The fraction of natural oligopeptides is present, in the spirulina extract, with a titrated content, that is, the content is quantitatively defined in an accurate, repeatable and reliable manner by means of titration.

In accordance with other embodiments, there are provided formulations in liquid oral products, such as syrup, or solid products, in particular dried products, such as orodispersible granulates, comprising the composition according to the present description.

According to other embodiments, there is also provided a method to prepare a composition based on stabilized spirulina extract. The method comprises: a) selection of the algal biomass of spirulina; b) supply of spirulina raw material; c) optional grinding; d) optional rehydration; e) optional freezing; f) optional thawing; g) extraction; h) optional stabilization of the phycobiliproteins; i) stabilization of the oligopeptides.

### DESCRIPTION OF THE DRAWINGS

These and other aspects, characteristics and advantages of the present invention will become apparent from the following description of some embodiments, given as a non-restrictive example with reference to the attached drawings wherein:
- fig. 1 is an MW distribution graph from a Total Ion Current (TIC);
- fig. 2 is a graph of the titer of oligopeptides in commercial samples of spirulina in relation to their content of phycobiliproteins;
- figs. 3a and 3b show NMR spectra of aqueous spirulina extract and the effect of enzymatic digestion on the oligopeptides, in particular fig. 3a shows spectral regions related to the aromatic signals of Tyr and Pha, respectively, at time zero (bottom) and at end kinetics (top), and fig. 3b shows spectral regions related to the methyl signals of branched-chain amino acids (Val, Leu and Ile), respectively, at time zero (bottom) and at end kinetics (top);

- fig. 3c shows kinetic curves of enzymatic digestion by endogenous proteases;
- fig. 4 is a graph showing heart rates under exertion in constant power repetitions;
- fig. 5 is a graph showing average climbing speed (VAM, from the Italian *'velocità ascensionale media'*) vs heart rates under exertion;
- fig. 6 shows graphs of analytical characterization of the aqueous spirulina extract fraction by means of NMR spectroscopy;
- fig. 7 shows a correlation graph between the content of the aromatic amino acids and the branched-chain amino acids on aqueous extracts from several different algal sources;
- fig. 8 is a graph of DOSY NMR measurements for the evaluation of the average value of the molecular weight on the mixture of oligopeptides;
- fig. 9 is another graph showing VAM vs heart rates under exertion;
- fig. 10 is another graph showing VAM vs heart rates under exertion.

### DESCRIPTION OF SOME EMBODIMENTS

We will now refer in detail to the possible embodiments of the invention, of which one or more examples are shown in the attached drawings, by way of a non-limiting illustration. The phraseology and terminology used here is also for the purposes of providing non-limiting examples.

It is understood that elements and characteristics of one embodiment can conveniently be incorporated into other embodiments without further clarifications.

The embodiments described here concern compositions, formulations and preparations based on spirulina extracts comprising phycobiliproteins and a titrated and stabilized fraction of natural oligopeptides having a molecular weight lower than 2500 Dalton.

The phycobiliproteins and natural oligopeptides of the compositions, formulations and preparations described here are natively present in the spirulina.

With the expression "natively present in the spirulina" here and in this description we mean that the phycobiliproteins and natural oligopeptides originate exclusively from the natural metabolism of spirulina and are not added artificially. In other words, the present composition and the corresponding extract exclusively contain the phycobiliproteins and oligopeptides intended as spontaneous metabolites of spirulina.

We must clarify here that the phycobiliproteins and natural oligopeptides referred to in the present description are not artificially introduced into the compositions described here during formulation, they are instead naturally present in the spirulina extract alone.

This aspect is very advantageous because Applicant has found that any extraneous oligopeptides, that is, non-native ones, which could be added would not have the same chemical structures as those naturally produced by the metabolism of spirulina to which we instead refer in the present description. In particular, the biological activity of an oligopeptide is determined by its precise sequence of amino acids, and it is known that only very few oligopeptides have biological activity, particularly affecting the cardiovascular system.

Many studies have been done regarding the preparation and biological properties of artificial oligopeptides. In all cases, these oligopeptides are artificially prepared by means of enzymatic digestion *in vitro,* starting from various protein sources, and they are not natural metabolites already present in plant (or animal) extracts. If a mixture of oligopeptides of different origins were added to the spirulina extract, they would certainly not have the same chemical structure, that is, the same amino acid sequence, as those already present in the spirulina. This preparation would not give any guarantee either on possible biological effects, or on food safety; what is more, oligopeptides from *in vitro* enzymatic digestion are in any case classified as a "new chemical entity" and have to be treated as such from a regulatory and safety point of view.

The compositions, formulations and preparations described here are obtained starting from aqueous spirulina extracts selected, in particular, for the content in natural oligopeptides having a molecular weight lower than 2500 Dalton. Favorably, in the extracts described here, the algal metabolites are made immediately available for efficient assimilation, and they are stabilized, blocking the hydrolytic action of the endogenous proteases, in order to preserve their integrity.

The content in oligopeptides is titrated according to an analytical method described here and the preparations thus obtained are characterized by a minimum content in oligopeptides and phycobiliproteins.

Some embodiments described here therefore concern the formulation of extracts of spirulina that is selected on the basis of the metabolic profile, with particular regard to the titrated content in phycobiliproteins and in the oligopeptides with a molecular weight lower than 2500 Dalton, preferentially containing Tyr, Phe, Val, Leu, Ile.

According to some embodiments described here, the total content of the fraction of oligopeptides, referred to a quantity of bound Tyr contained in the fraction of oligopeptides and measured by means of the NMR method, is higher than 2.0 µmoles per daily dose administered.

According to some embodiments described here, the total content of the fraction of oligopeptides, referred to the quantity of bound Tyr contained in the mixture and measured by means of the NMR method, is higher than 35 µmoles per 100 grams of final product, intended as the composition described here.

In some embodiments, the fraction of natural oligopeptides natively present in the spirulina that have a molecular weight lower than 2500 Dalton comprises Tyr, Phe, Val, Leu, Ile, in molar ratio, respectively, 1:1:2:2:2.

In other embodiments, the fraction of natural oligopeptides natively present in the spirulina that have a molecular weight lower than 2500 Dalton does not comprise residues of Asn, Gln, His, Pro and Trp.

In other embodiments, the composition has a ratio between total phycobiliproteins and the fraction of natural oligopeptides natively present in the spirulina that have a molecular weight lower than 2500 Dalton comprised in the range from 1:1 to 20:1 expressed in milligrams of phycobiliprotein on µmoles of bound Tyr measured by means of the NMR method, able to promote the synergy between the two classes of phytocompounds.

Applicant has found that such compositions, formulations or preparations improve the readiness for absorption/assimilation of these natural phytocompounds by means of extraction and formulation in liquid oral products (syrup) and dried oral products (orodispersible granulates), and guarantee their stability while preserving their integrity from the action of endogenous proteases. Furthermore, the opportunity to obtain beneficial effects with a lower contribution of algal biomass considerably reduces the risk of accumulation of heavy metals, microbial load or cyanotoxins that may be present in the algae matrix.

Since spirulina is naturally rich in numerous vitamins, with the exception of vitamin D, in accordance with some embodiments the compositions, preparations, products and formulations described here can provide, for example, the addition of an adequate quantity of vitamin D to the alga extract, in accordance with the common daily requirement, in order to complete the multivitamin pool already naturally present in the spirulina.

In other embodiments, the composition in accordance with the embodiments described here can also include other active substances and/or botanical varieties or extracts thereof, with an action that is complementary to or synergistic with the present composition based on spirulina extract, selected from one, several or a combination of:
- vitamins, such as one or more of: Vitamin A, Vitamin B1, Vitamin B2, Vitamin B3 (PP, niacin), Vitamin B5 (Pantothenic Acid), Vitamin B6, Vitamin B12, Vitamin C, Vitamin D, Vitamin E, Vitamin H, vitamin K, and/or
- minerals or metals, such as one or more of: Magnesium, Potassium, Chromium, Boron, Zinc, Selenium, Calcium, Fluorine, Phosphorus, Iron, Iodine, and/or
- complementary nutrients, additional antioxidants, plant substances, extracts and/or preparations such as one or more of: lactoferrin, berberine, berberine hydrochloride, silymarin, monacolin, folic acid, astaxanthin, policosanol/s, sinensetin, essential omega-3 fatty acids, for example EPA and/or DHA, and/or omega-6, resveratrol, l-carnitine, l-acetyl-carnitine, propionyl-l-carnitine, acetyl-l-carnitine taurinate, l-carnitine tartrate, creatine, carnosine, monascus purpureus, diosmin, hesperidin, troxerutin, glutamine, phosphoserine, turmeric, fermented papaya, ginkgo biloba dry extract, green tea dry extract, caffeine, maca, damiana, red clover, dioscorea, black cohosh, soy, sage, eleutherococcus, blueberry berries, avena sativa, fenugreek, tribulus terrestris, taurine, guarana, serenoa, ginseng, hawthorn, garlic, yarrow, capsicum, onion, coleus forskohlii, ginger, flavonoids deriving from bergamot extract, propolis extract, or extract of forest fruits (blueberry, bilberry, cranberry, currant, blackberry, raspberry), aronia (chokeberry), mulberry (mulberry), elderberry, hibiscus, orange, green tea, vitis vinifera, spices (rosemary, thyme, oregano, cumin, cinnamon, black pepper or other), olives (olea europea).

In other embodiments, the fraction of natural oligopeptides natively present in the spirulina that have a molecular weight lower than 2500 Dalton is purified and constitutes at least 50% w/w with respect to the dry content of the algal metabolites.

In other embodiments, the composition disclosed here is for one or more of the following uses:
- for food supplementation with a restorative, energizing, anti-hypertensive action, for support in states of psychophysical fatigue, for states of stress and exhaustion, for support in reducing recovery times after intense sport or work activity, to increase endurance to fatigue, to support sports activity in order to reduce muscle pain associated with inflammatory states, to limit the onset of cramps and lower heart rate under exertion, for support in accelerating recovery during convalescence, to improve mood and cognitive faculties, to reactivate the energy metabolism;

and/or for one or more of the following uses:
   - for food supplementation in order to improve the efficiency of the immune system, to counteract the effects of acute and chronic inflammatory states and manifestations associated with autoimmune diseases and acute manifestations of Herpes;
and/or for one or more of the following uses:
   - for nutraceutical, cosmetic, cosmeceutical, pharmaceutical and medical device formulations able to promote blood circulation, in particular peripheral, and to assist in the maintenance and/or restoration of the regular functionality of the cardiovascular system;
and/or for one or more of the following uses:
   - for food supplementation as an adjuvant in the control of glycemic metabolism; or combinations thereof.

### Characterization of the natural metabolites of spirulina

Applicant has carried out studies on the characterization of the natural metabolites of spirulina, which have focused attention on a family of oligopeptides having a molecular weight distribution mainly concentrated in the range of 600-2000 Dalton, as evidenced by the LC-MS analyzes (example 2).

As better described below, further structural information emerges from the analyzes using nuclear magnetic resonance (NMR) spectroscopy. The ¹H NMR spectrum highlights a great variety of metabolites, amongst which the signals that can be assigned to free amino acids and to the same amino acid units bonded in oligomeric form by means of peptide bonds stand out. The latter show a chemical shift different from the corresponding free αaa (α-amino acids) and a broadened spectral band. This band widening is due both to the effects of T2 relaxation and also to the multiplicity of magnetic surrounding present in the different oligomers. The 2D-COZY, 2D-TOSCY and 2D-HSQC two-dimensional correlation analyzes allow to identify the main αaa that make up the various structures of the oligopeptides. Amongst these we have Tyr, Phe, Val, Leu, Ile, Lys (lysine), Met (methionine), Asp (aspartic acid), Glu (glutamic acid), Gly (glycine), Ala (alanine), while Asn (asparagine), Gln (glutamine), His (histidine), Cys (cysteine), Pro and Trp are absent. Although the absolute concentration of the oligopeptides varies between the different samples of commercial spirulina, Applicant has surprisingly found that the molar ratios between some amino acids, measured on the entire mixture of oligopeptides, remain constant in all the samples analyzed. In particular, we have observed that the following relation is respected: Tyr:Phe:Val:Leu:Ile = 1:1:2:2:2. Due to the partial overlap of the signals, the integrations of the other amino acids present are less precise than these; however, the ground quantities of the latter also seem to be fixed according to ratios of whole numbers. This observation suggests the hypothesis that all oligopeptides, or most of them, derive from a well-defined peptide which is subsequently fragmented by endogenous hydrolytic enzymes. The 2D-DOSY analysis, by measuring the diffusion coefficient, allowed to estimate the average molecular weight of the oligomers, which was equal to 1330 Dalton, in excellent agreement with the evidence of the LC-MS analyzes carried out here.

Because the aromatic signal of the bound Tyr residue measured by means of the NMR method does not show overlaps with other metabolites, it can be integrated with high accuracy and precision, possibly using fitting tools; the titration of the bound Tyr measured by means of the NMR method is carried out by comparison with the maleic acid signal which is used as reference standard (example 3). Thus, the molar concentration of the bound Tyr is obtained, as a whole, in the various structures of oligopeptides. This concentration can be referred, for comparative convenience, to one gram of dry algal biomass. Given the multiplicity of oligomers and the regularity of the molar ratios between amino acids, the titer of the bound Tyr measured by means of the NMR method is assumed to be representative of the total content of oligopeptides at MW lower than 2500 Dalton.

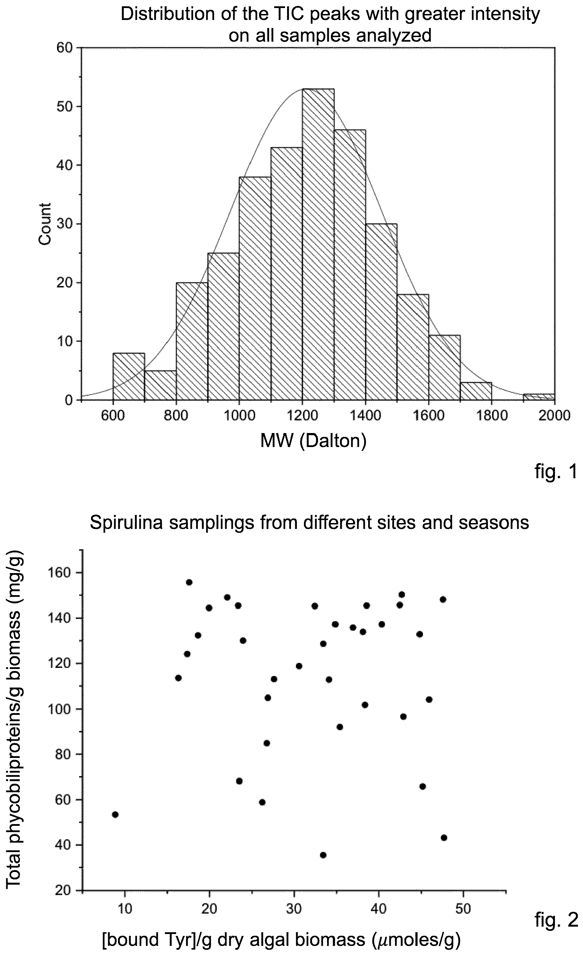

Surprisingly, it has been observed that, although all the commercial samples of spirulina analyzed by Applicant contain oligopeptides made up, as a whole, from the same amino acid composition, their quantity, expressed per mass of dry spirulina, is highly variable and dependent on numerous factors, such as: algal strain, cultivation conditions (pH, temperature, composition of the nutrients), seasonality, harvesting and processing modes. In the samples analyzed, the content of bound Tyr measured by means of the NMR method varies from 8.8 to 47.7 µmol/g against a substantially equivalent content of total proteins in all the samples (fig. 2). It is relevant to note that there is no correlation between the quantity of phycobiliproteins and that of oligopeptides.

For comparative purposes, the ¹H NMR analyzes were carried out by Applicant both on the intact aqueous extracts and also on the permeates from ultrafiltration through a 10 KDa cut-off membrane. The content in oligopeptides in the permeates has been shown to be 95%, on average, compared to what is recorded on the extract in its unaltered state. This evidence is only apparently in contradiction with the presence of the proteins with high MW in the intact solution. It should be remembered, in fact, that in these analysis conditions, the proteins with high MW do not contribute significantly to the ¹H NMR spectrum, since they present strongly broadened signals that only generate a distortion of the baseline. It is known, for example, that phycocyanins are present in macroaggregated extracts at MW 180-330 KDa and, due to their limited mobility, they have very short T2 relaxation times, with consequent broadening of their NMR signals.

Applicant's studies have highlighted the action of one or more specific endogenous peptidases which hydrolyze the oligopeptides releasing the individual constituent amino acids and which act once the cell membranes are broken and the metabolites are released in the same dispersing liquid medium (example 4). Therefore, the residual content in oligopeptides of an extract or preparation based on spirulina can be significantly reduced or even zeroed if the conditions of extraction and processing of the extracts are not optimized in order to limit the action of the peptidase. Consequently, the efficacy of products based on spirulina that can be ascribed to the biological properties of the oligopeptides can only be guaranteed by a processing process that is much shorter than the state of the art (as on the contrary demonstrated in example 4) able to block the hydrolytic action of the peptidases on the final preparation or formulation, guaranteeing the integrity of the oligopeptides.

### Determination of the titer of the oligopeptides in the aqueous spirulina extracts

The titration of the oligopeptides is in particular one aspect of the present invention.

The analyzes carried out by Applicant on numerous samplings of algal biomass demonstrate that the speed of enzymatic digestion varies from sample to sample. Furthermore, it has been observed that the concentration of phycobiliproteins, and in particular of the phycocyanins present in the same extracts, undergoes a non-significant decrease, in the same preservation period, highlighting a marked specificity of action of the enzymes toward the oligopeptides. Even in the hydroglycolic extracts and in the syrups that can be used to macerate the alga, the hydrolytic action of the peptidases occurs despite the limited content of water in the dispersing medium; the content in oligopeptides decreases over time causing the loss of efficacy of the product.

Some preparations in the form of syrup and orodispersible granulates based on spirulina extracts titrated in phycobiliproteins and in the total oligopeptides prepared by Applicant were tested as supplements to support sports activity. By way of example, and not in a restrictive sense, the daily doses of the formulation varied in the range of 2÷5 g/day corresponding to a content of algal extract obtained from 60÷150 mg of dry biomass.

The action of the products was mainly manifested with the reduction of recovery times after prolonged effort, the increase in resistance to fatigue, the reduction of muscle pain during and after training sessions, the limitation of the onset of cramps and the lowering of the heart rate under exertion. In particular, this last parameter correlates the intake of the preparations described here to an action on the cardiovascular system. The extent of the effects observed is correlated to the synergy between the phycobiliproteins, which have an anti-inflammatory action, and the oligopeptides with a MW lower than 2500 Dalton. In those preparations in which, with the same content in phycobiliproteins, the concentration of oligopeptides is very low, because they are obtained from an algal source poor in these metabolites, or because they are hydrolyzed by enzymatic digestion, Applicant has found that the physiological effects are drastically reduced. Conversely, the formulations prepared using only the fraction of oligopeptides contained in the same algal extracts and deprived of the phycobiliproteins show a limited action in support of sports activity. For comparison, the intake of an equivalent quantity of the same commercial algal biomass, not subjected to extraction, (for example 100 mg/day), does not provide significant supplementation effects. In particular, see examples 8 and 9 described below for confirmation.

Applicant has therefore deduced that the full restorative, anti-inflammatory, oxidative anti-stress and cardiovascular system support action is achieved only by making the assimilation of these algal metabolites more efficient, for example by making it possible to already absorb them through the oral mucosa, before the excessive acidity at gastric level destroys the properties of the native phycocyanins by means of denaturation.

Alternatively, the compositions and preparations according to the embodiments described here can be included in gastro-resistant capsules which release them only at the intestine level. In fact, it is known that the tertiary structure of the phycocyanins is denatured at a pH close to 3 and that its properties are lost following denaturation.

The biological activities of the oligopeptides are also linked to the exact concatenation of amino acids and the loss of even a single residue compromises their properties. Consequently, it is essential to promote the assimilation of these metabolites before the hydrolytic action of the gastric juices occurs.

The compositions and formulations of the embodiments described here are obtained from aqueous extracts in which the algal metabolites are released, following rupture of the cell membranes, in order to make them immediately available for efficient assimilation.

According to the embodiments described here, particular attention is paid to the processing of the spirulina in order to limit the hydrolytic action of the endogenous proteases and to stabilize the final formulations and preserve the integrity of the oligopeptides.

Applicant has carried out a metabolomic analysis of spirulina which has led to the identification of two classes of active ingredients to which Applicant attributes the main contribution in the action of supporting sports activity, but also, more generally, the proper functioning of the cardiovascular system, the contrast to oxidative stress and anti-inflammatory action. As described above, these active ingredients consist of two mixtures of components: the phycobiliproteins and the oligopeptides at MW<2500 Da.

The titration of the phycobiliproteins follows an analytical protocol well described in the literature and commonly accepted, and it is based on a simple recording of the UV-Vis spectrum on the soluble fraction of the aqueous extract.

The content in oligopeptides is titrated according to an analytical method which is described below, and the titration guarantees a minimum limit in the content in oligopeptides and in phycobiliproteins in the daily administered dose of the preparations. This aspect becomes relevant since the indication of a suggested and administered daily dose is not typical of drugs alone, but also of food supplements/nutraceuticals. In fact, these supplements, such as for example the composition described here, are effective if the quantity of oligopeptides and phycobiliproteins taken daily exceeds a minimum limit. Guaranteeing a minimum limit in the content in oligopeptides with a molecular weight lower than 2500 Dalton and phycobiliproteins is therefore essential for the effectiveness of the composition and the extract described here.

### Determination of the titer in oligopeptides in the aqueous spirulina extracts

The analytical characterization of the oligopeptides does not have a unique solution which is generically applicable to any unknown mixture. For this reason, Applicant has made titration attempts with four different analytical techniques, optimized for the specific case, in order to evaluate their applicability, accuracy and limits. The techniques used were:
i) Mass spectrometry applied to liquid chromatography (LC-MS). A SCIEX-X500 QTOF high resolution spectrometer was used;
ii) Bredford colorimetric test;
iii) BCA colorimetric test;
iv) Nuclear Magnetic Resonance (NMR) spectrometry.

### LC-MS

Applicant has carried out LC-MS (Liquid Chromatography - Mass Spectrometry) analyzes performed on the aqueous spirulina extracts which have shown the presence of a wide distribution of oligopeptides the molecular weights of which vary from a few hundred to a just few thousand Daltons. The largest population of oligopeptides showed a MW distribution centered around 1300 Da (example 2, fig. 1).

### Bredford and BCA colorimetric test

Applicant has found that the colorimetric methods described in the literature and commonly used for the quantification of proteins cannot be used for a precise and accurate quantitative analysis of oligopeptides in spirulina extracts.

Within the scope of the present invention, Applicant has carried out both the Bredford test, in its numerous versions described in the literature, and also the Bicinchoninic acid (BCA) test on the ultrafiltration permeate with 3 KDa and 10 KDa cut-off of the aqueous spirulina extracts. All tests proved to be inaccurate and imprecise.

In particular, Applicant has found that the BCA test is not selective and is subject to interference by reducing sugars, free amino acids (in particular Tyr), fatty acids and other metabolites. All these metabolites, present in variable quantities in the aqueous extracts of the alga, function as Cu(II) reducing agents and contribute to excessively distorting the quantitative estimate of the oligopeptides. Furthermore, even the selective purification of the oligopeptides by means of precipitation proves to be impractical, since a substantial fraction of them, with a lower molecular weight, remains soluble in the usual aggregation conditions.

Furthermore, Applicant has found that the Bredford test, on the contrary, falsifies, in negative, the content of oligopeptides since the bond between the Coomassie Brilliant blue G-250 probe and the oligopeptides is achieved effectively only for fragments with a MW higher than 3000 Dalton. In all the samples analyzed, the content of oligopeptides in the permeate of the membranes with 10KDa cut-off is underestimated by the Bredford test and is approximately 5% of what determined by means of NMR spectroscopy.

Similarly, even the methods to quantify total proteins that are based on absorbance at 280nm are not accurate and precise, due to the interference caused by other natural metabolites, of a non-protein nature, which absorb at these wavelengths.

### Nuclear Magnetic Resonance (NMR) Spectrometry

Applicant has found that the titration in oligopeptides in the spirulina extracts can be carried out with accuracy and precision by means of NMR spectroscopy (example 3).

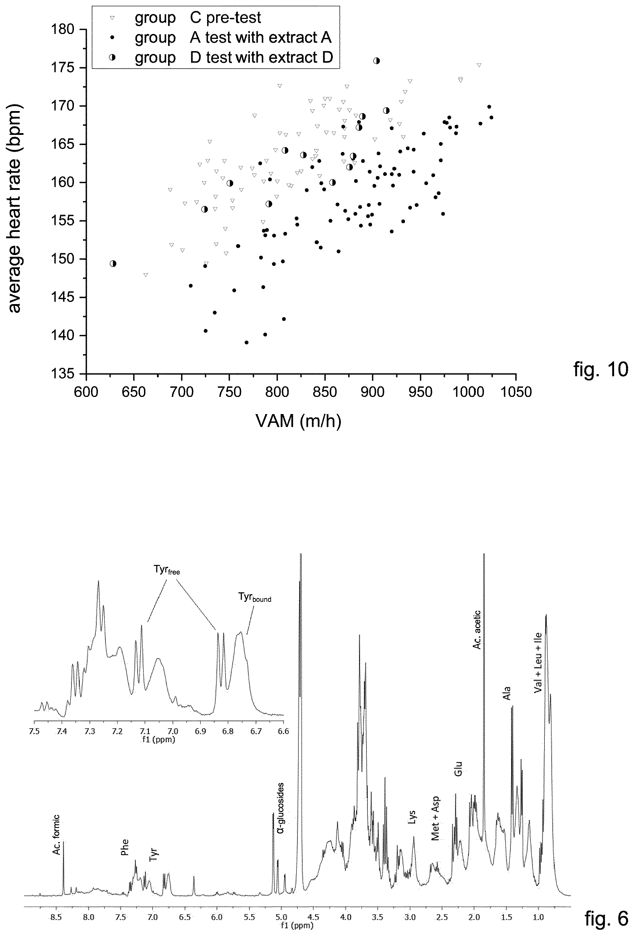

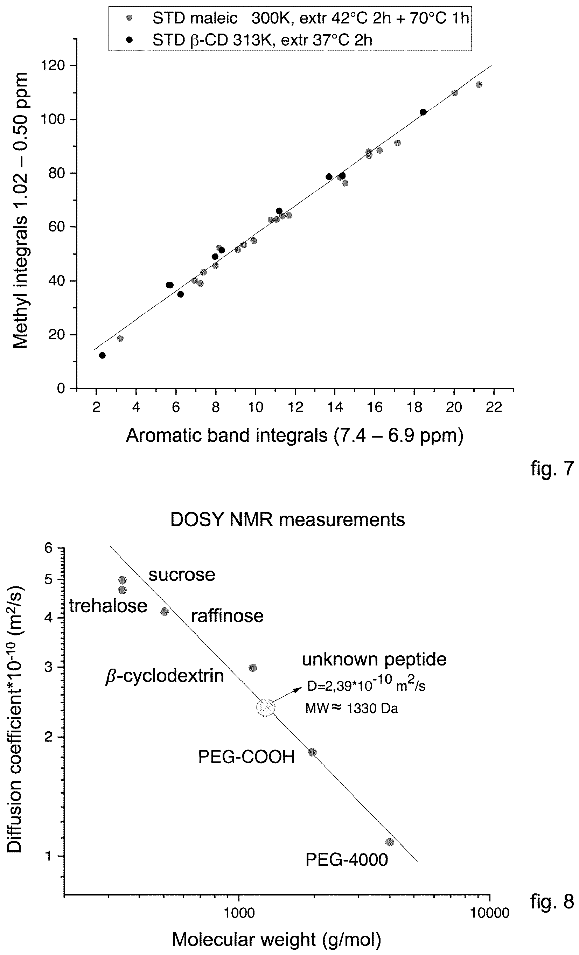

The ¹H NMR spectrum of a typical spirulina extract, recorded at 400 MHz, is shown in fig. 6 and is dominated by the metabolites present at higher concentration. The following stand out: saccharides (between 3.3 and 5.3 ppm), the most common organic acids (acetic, formic, lactic, succinic, etc.), free amino acids and the same amino acid units bonded in oligomeric form by means of peptide bonds. The latter show a different chemical shift from the corresponding free amino acids and a broadened spectral band. This band widening is mainly due to the multiplicity of magnetic surrounding present in the different oligomers. Measurements show that the intensity of the signals that can be associated with the oligopeptides is very high, a sign of a high molar concentration. These signals, for the most part, are partly or completely overlapping with each other (at 400 MHz) and it is not possible to assign one signal to a single amino acid or to a well-defined class. An exception is the case of the aromatic signals, in particular of tyrosine (6.82 and 7.13 ppm for the free form; 6.76 and 7.06 ppm for the bound one) and of the methyls in the three branched-chain amino acids (valine, leucine, isoleucine in the region between 0.55 and 1.01 ppm). The spectral band centered at 6.82 ppm can be conveniently integrated with respect to an external standard of known concentration (in this specific case, maleic acid in glass capillary is used) in order to obtain the quantification of all forms of tyrosine included in any oligopeptide. In general terms, this measure may not be representative of the entire mixture of oligopeptides, since not all of them necessarily contain tyrosine. However, experimentally it has been observed that, despite the absolute concentration of the oligopeptides being variable between the different samplings of commercial spirulina, the molar ratios between the amino acids, measured on the entire mixture of oligopeptides, remain constant in all the samples analyzed. For example, it is possible to plot the integrals of the aromatics and methyls on the branched-chain amino acids, respectively, measured on a large number of different extracts (fig. 7). The linear correlation observed shows a very high coefficient (R²=0.993) and testifies to the regularity in the amino acid composition. Due to the partial overlap of the signals, the integrations of the other amino acids present are less precise than these; however, the ground quantities of the latter also seem to be fixed according to constant ratios.

Experimentally, Applicant has observed that the total content (titer) of the mixture of oligopeptides shows a considerable variability between different commercial samples of spirulina, and this is what the choice of an accurate selection of the raw material is based on, based precisely on the titration, as one of the operative steps of the method to obtain spirulina extracts in accordance with the present description.

According to the NMR method, the titer of the algal metabolites is measured with reference to an external standard contained in a glass capillary.

By way of example and not in a restrictive sense, the solution in the capillary contains maleic acid, sodium tetramethyl silyl propionate (TMSP) and CuSO₄. The maleic acid generates an ¹H singlet at 6.36 ppm in a spectral region devoid of other signals and therefore can be integrated with precision and accuracy, while the TMPS has a singlet at 0.00 ppm. The copper salt is added in order to induce a relaxation such as to lower the relaxation time (T1) value on the maleic acid from 6.53 seconds to 1.04 seconds, without causing any significant line widening. The integral of the maleic acid signal in the capillary is calibrated by introducing it into a solution with a known concentration of a standard molecule. As an example, a solution of saccharose prepared by weighing at a concentration of 1,000 mM can be used.

The ¹H NMR spectrum of the saccharose sample, containing the capillary, is recorded, setting the acquisition parameters that allow the complete relaxation of the signals, for example, a relaxation time of 6 s and an acquisition time of 2.5 s.

The saccharose signals are integrated by giving the value of 1.000 to its reference protons, and the integration of the singlet associated with the maleic acid (Ik) is obtained. The Ik value characterizes the specific standard capillary that is then introduced into the tubes with the unknown samples of spirulina. The new spectrum is recorded, and the signals of the unknown metabolites are integrated with respect to the integral of the maleic acid to which its Ik value is assigned. Since the analysis tubes are isocaliber and the capillary is always the same, the integral of each unknown metabolite numerically corresponds to its concentration (mM) multiplied by the number of protons associated with that NMR signal. This value is finally corrected for any dilution factor that is achieved, for example, if a minimum volume of D₂O has been introduced into the unknown sample.

Applicant has found that the set of oligopeptides present in all the spirulina extracts constitutes a well-defined family of components, delimited by a fraction of oligopeptides with a MW not exceeding 2500 Da; the LC-MS analysis identifies the component with mass 2050.02639 Dalton as the oligopeptide with the highest MW in the mixture. From the LC-MS listing it is possible to construct a statistical distribution of the analytes as a function of their mass, and a Gaussian curve centered at about 1200-1300 Da as the highest frequency value is obtained (fig. 1). In order to characterize this parameter with greater precision, NMR spectroscopy was used again as a technique complementary to and independent from LC-MS. 2D-DOSY (Diffusion Ordered Spectroscopy) analysis, by measuring the diffusion coefficient, has allowed to estimate the average molecular weight of the oligomers which was equal to 1330 Dalton, in excellent agreement with the evidence of the LC-MS analyzes (fig. 8).

### Preparation method

Other embodiments concern a method to prepare a composition based on spirulina extract.

The method aims to break the algal cell membranes, bring the water-soluble phytocompounds (in particular phycobiliproteins and oligopeptides at MW<2500 Da) into solution, possibly in a quantitative manner, and preserve them from post-extraction degradation.

The phycobiliproteins are subjected to denaturation, which entails loss of nutritional properties; to prevent denaturation, it is preferable that the extract is not subjected to heating above 45°C (except for the use of stabilizers whose effects, however, are not always guaranteed) or in a highly acidic (pH<3.5) or basic (pH>7.5) environment. Generally, maximum stability is at pH=6.0-6.5 which typically stabilizes spontaneously in the extraction conditions described below.

The oligopeptides, on the other hand, are thermostable, but subjected to enzymatic digestion by endogenous proteases.

Applicant has found that this enzymatic process, which entails a spontaneous hydrolytic action, progressively hydrolyzes the oligopeptides over time, starting from the moment in which proteases and substrates are dissolved in a liquid medium, and therefore the duration of the process must be limited as much as possible.

Applicant has also found that at present this enzymatic process can be definitively prevented only by removing the water by means of a drying process, or by immobilizing the metabolites by means of freezing.

The method according to the embodiments described here comprises:
a) selection of the algal biomass;
b) supply of the raw material;
c) optional grinding;
d) optional rehydration;
e) optional freezing;
f) optional thawing;
g) extraction;
h) optional stabilization of the phycobiliproteins;
i) stabilization of the oligopeptides.

With regard to step a) of selection of the algal biomass, the latter is preliminarily selected by means of titration of the oligopeptides and phycobiliproteins on the single daily collection batch. The batches are selected and accepted so that the algal biomass has a content of oligopeptides greater than 25 µmol/g of dry biomass (expressed in bound Tyr referred to the NMR method) and of total phycobiliproteins greater than 90 mg/g of dry biomass.

With regard to step b) of supplying the raw material, spirulina is commercially available in three most common forms: A) dried in the form of flakes or extruded noodles; B) powder obtained by grinding the dried product A; C) fresh frozen biomass (not dried) with an average water content equal to 70% w/w. The dried forms (A and B) are the most common because they guarantee a simpler preservation, but the drying process entails an inevitable partial fermentation which generates malodorous substances and deteriorates the taste of the alga. The preferable form is "C" because it avoids the drying step and simplifies the subsequent processing process, because it passes directly to the thawing step, without grinding, rehydration, freezing.

Step c) of grinding is applied only to the dried product in form A and serves to make the rehydration more complete and homogeneous in all the biomass. Preferably, the grinding is carried out according to a technique that prevents overheating, since some phytocompounds (including phycobiliproteins) are thermolabile.

Step d) of rehydration is applied to forms A and B and is carried out by dispersing the algal biomass on a quantity of deionized water equal to three times the algal mass. With these quantities, the natural intracellular water content is reconstituted without leaving excess liquid. The rehydration is carried out at ambient temperature (about 25°C) and lasts for about 30' until the water is completely absorbed by the alga grains.

Step e) of freezing is applied to forms A and B subjected to rehydration and occurs by bringing the rehydrated biomass to -20°C, without accelerating the process, in order to promote the growth of ice crystals which, by dilating, break the cell membranes. The preservation of the biomass at -20°C lasts for the time necessary to ensure the complete freezing of the entire biomass and therefore depends on the volume of the biomass and the heat exchange capacity of the cold room. On small volumes, typically 1.5-2 hours are sufficient.

Step f) of thawing provides to take the frozen biomass into contact with a heat exchanger at approximately 37°C.

We must clarify that the previous steps of grinding c), rehydration d), freezing e) and thawing f) are functional for improving the rupture of cell membranes and the release of the water-soluble metabolites in the extraction solution; however, these can be optional if the following step g) of extraction, as better explained below, is carried out with vigorous mechanical agitation such as to effectively fragment the micro-filaments of the alga and maximize the release of the oligopeptides in the liquid phase. Some algae samples have proven to be more fragile and exhibit faster metabolite release kinetics. For others, however, the previous steps of grinding c), rehydration d), freezing e) and thawing f) are necessary to increase the extraction yield.

The step of extraction g) is a step of extraction with solvent. The solvent can be a polar solvent and, in particular, it can be a hyposaline polar solvent. The step of extraction g), in particular, is carried out by dispersing the rehydrated biomass in a volume of extractant solution such as to take the algal content to 4.0-4.5% w/V. Typically, a quantity of extractant equal to seven times the rehydration water is added. The extractant medium can be deionized water or water containing a minimum quantity of salt (NaCl up to 0.3% w/V). In general, the extractant solution preferentially has low salinity (for example up to a maximum of 0.3% in NaCl) in order to generate an osmotic shock between the solution external to the cells and the internal one. This pressure helps to break the membranes promoting the release of the metabolites. It is preferable to preheat the extractant solution and then add it to the biomass, then start a vigorous mechanical agitation and keep the thermostat control at 41-43°C for 2 hours.

The temperature and duration of the step of extraction g) affect the content of phycobiliproteins and oligopeptides in the extractant solution. The step of extraction g) is favorably carried out at a temperature not exceeding 45-50°C and for a period of time not exceeding 4 hours, in particular not exceeding 3 hours, more in particular not exceeding 2 hours. High temperatures accelerate the extraction kinetics, but preferentially do not exceed 45-50°C, which is the stability limit of the phycocyanins, which otherwise denature since they are thermolabile. Low temperatures require longer extraction times, which are however harmful because they allow the hydrolysis of the oligopeptides by the endogenous proteases which, once extracted, are found in the same dispersing medium as the substrates. In a preliminary step, it is possible to measure the content of the extracted phycobiliproteins over time, by means of spectrophotometry, and we have observed that in the extractions carried out at 41-43°C the plateau is reached after 2 hours, and this is the preferential mode; in the extractions at 37°C, 3.5-4 hours are required, while at 8-10°C 16-24 hours are required. Therefore, the step of extraction can be carried out in particular at a temperature between 41 and 43°C. Furthermore, the extraction time preferentially does not exceed 3 hours. These indications are to be understood in a non-restrictive sense, since it is possible that the duration of the extraction can be further reduced by using stabilizers for the phycocyanins and increasing the temperature.

At this point, after the step of extraction g), the suspension of the biomass contains insoluble components dispersed in solid-gelatinous fragments with a granulometry of the order of a few microns and a liquid phase containing the dissolved water-soluble metabolites.

Depending on the type of product to be obtained, the continuation of the process may require diversified steps.

The common element for all the types of following operating steps is the definition of a minimum content of the oligopeptides, their quantification and a final formulation that guarantees their stability (for example for at least 1 year). These operations are cumulatively referred to as step i) of stabilization of the oligopeptides.

The presence of other algal phytocompounds, such as for example phycobiliproteins, and their quantification are a valuable element, especially for nutraceuticals, but not strictly mandatory; this aspect is part of the aforementioned step h) of stabilization of the phycobiliproteins.

By way of example, two types of products can be mentioned which are at the extremes of the range of products that can be obtained by means of the composition according to the present description:
A) products containing partly purified oligopeptides intended also for a pharmaceutical development;
B) solid formulations (orodispersible granulates, etc.) or syrups containing all the components of the algal biomass, preferentially dedicated to nutraceuticals.

By way of example, in type "A", at the end of the extraction, a solid-liquid separation is carried out (by means of filtration or centrifugation) from which the insoluble is discarded and any further purifications of the liquid phase are carried out according to conventional procedures (e.g. fractionation by precipitation, chromatographic separations, ultrafiltration, etc.); a possible formulation with excipients and drying follow.

Again by way of example, in type "B", in order to obtain a finished product one passes directly to the formulation phase by adding the excipients (and any stabilizers) directly to the extraction suspension and finally one proceeds to drying. If the processing steps that follow the extraction require heating or an acid jump, and/or a residence in the liquid phase for long periods of time (for example more than 2 hours) it is convenient, but not binding, to add components and excipients capable of increasing the stability of the active ingredients. Some operating modes aimed at stabilizing the active ingredients are described below.

### Stabilization of the phycobiliproteins

The stabilization of the phycobiliproteins can be achieved, for example, by adding a syrup based on simple sugars, to which possibly a vegetable emulsifier has been added, or by adding a compound based on α-tocopherol or also by means of "coating" or "microencapsulation".

Applicant has found it effective to add, to the solution containing the phycobiliproteins, a saccharose syrup containing soy lecithin at 3% in a quantity equal to 10% by mass with respect to the extract. The addition of this solution allows a stabilizing action, against thermal denaturation, by the simple sugars (glucose, fructose, saccharose, trehalose, etc.) and by the soy lecithin or equivalent vegetable emulsifier, such as sunflower lecithin. Alternatively, it is possible to add α-tocopherol or vegetable oils rich in α-tocopherol (e.g. sunflower oil). As another alternative, the "coating" or "microencapsulation" technique, for example with maltodextrins, alginate, chitosan or mixtures thereof, can also be used as a useful technique to stabilize the phycocyanins.

### Stabilization of the oligopeptides

The oligopeptides are not thermolabile and their stabilization has to be aimed at preventing enzymatic digestion. A technique adopted by Applicant is freezing and/or drying with immobilization of the phytocompounds in the solid phase and removal of water, which is the true hydrolysis reagent of the peptide bond, or lyophilization. An alternative method can consist of heating, e.g. at 70°C, in which the proteases, like all proteins with high molecular weight, lose their biological activity following denaturation.

Favorably, the stabilization of the oligopeptides is carried out within 3 hours of extraction.

For a more detailed description of the embodiments of the present invention, the following experimental activities are included by way of example and not in a limiting sense.

### EXPERIMENTAL EXAMPLES

### Example 1: obtaining the aqueous extract and titration of the phycobiliproteins

100 mg of finely ground spirulina powder were accurately weighed into a glass vial; 300 µl of deionized water were added and the alga was left to rehydrate for 30' at a.t. (ambient temperature), the sample was then frozen by storing it at -20°C for a period of time comprised between 2 and 24 hours. The thawed sample was dispersed with 2,100 ml of an aqueous solution containing 2.5g/L NaCl and kept under magnetic agitation in an incubator at 41°-43°C for 2 hours.

The soluble extract was recovered by means of centrifugation and on this we determined the content of phycocyanins by means of UV-Vis spectroscopy according to the Yoshikawa method [Noritaka Yoshikawa, Amha Belay. Singlelaboratory validation of a method for the determination of c-Phycocyanin and Allophycocyanin in Spirulina (Arthrospira) supplements and raw materials by spectrophotometry. Journal of AOAC International. 2008, 91(3) 524-529] and of phycoerythrin according to the parameters described in Allen Bennett, Lawrence Bogorat. Complementary chromatic adaptation in a filamentous blue-green alga. The Journal of Cell Biology, 1973, 58, 419-135.

The spectrophotometric analysis was carried out, typically, by recording the UV-Vis spectrum between 240 nm and 800 nm of a solution obtained by diluting 50÷60 µl of extract with 1900÷2000 µl of 50mM phosphate buffer at pH=6.00 and calculating the dilution factor with the actual experimental volumes used.

### Example 2: analysis of the oligopeptides by means of LC-MS and MS-MS spectrometry (fig. 1)

An accurate description of the mixture of oligopeptides can be obtained by means of LC-MS analysis. The extracts of the commercial samples of spirulina were obtained according to the procedure in example 1, diluted with an equal volume of deionized water and subsequently subjected to ultrafiltration by means of a Nanosep cartridge, (PALL) with a 10 KDa cut-off; the permeates were injected into the LC-MS without further purifications using a SCIEX model X500 QTOF spectrometer. The chromatographic run was carried out with an Agilent 250x4.6 mm, 5µm SBAQ zorbax column, thermostat controlled at 60°C with a water/acetonitrile mobile phase gradient containing 0.1% formic acid. The total ion current (TIC) showed a bell-shaped distribution of the analytes between 6 and 22 minutes of elution. The list of molecular ions presenting an intensity greater than 1^{∗}10⁵ in the TIC was used to evaluate the statistical distribution of molecular weights, as shown in fig. 1. This distribution follows a relatively narrow Gaussian trend with the maximum of the frequency centered between 1200 and 1300 Da. Applicant has found that numerous oligopeptides, identifiable with their molecular ion and with the corresponding double charged ion, are present in all the extracts, albeit in different quantities from sample to sample.

### Example 3: ¹H NMR spectroscopic analysis and titration of the oligopeptides (fig. 2)

The quantification of the oligopeptides was carried out both on the complete extracts obtained as in example 1, and also on the permeates from the ultrafiltration through membrane with 10 KDa cut-off. In the first case, 500 µl of the aqueous extract were added with 200 µl of D2O and transferred into a 5mm test tube. In the second case, a solution was prepared by mixing 500 µl of aqueous extract and 500 µl of D2O which was ultrafiltered with a Nanosep cartridge, PALL, with a controlled porosity membrane, by subjecting it to a centrifuge cycle at 6000 x g for 30 minutes. The permeate was transferred directly into a 5 mm test tube. In all cases, a glass capillary containing a standard reference solution, for example of maleic acid which had previously been calibrated, was introduced into the test tube.

The ¹H NMR spectra of spirulina extracts were recorded by means of a Bruker Avance 400 spectrometer by conducting a pre-saturation of the HDO (water peak) with a sequence of noesyprld pulses from the Bruker library. The signals of the oligopeptides were integrated with respect to the signal of the maleic acid and the molar concentration of the metabolites containing bound Tyr was obtained by integrating the "broad" signal centered at 6.78 ppm. Similarly, it is possible to quantify the Phe residues from the corresponding aromatic signals or the cumulative resultant of the residues of Val, Leu and Ile from the methyl band in the region centered at 0.86 ppm.

The quantification of the content in total phycobiliproteins and in oligopeptides containing Tyr was carried out according to the methods of examples 1 and 3 on different samplings of commercial spirulina obtained from different producers or from collections in the same plant, but with different seasonality. Fig. 2 plots the concentration of oligopeptides with MW lower than 2500 Dalton (in abscissa) and the quantity of total phycobiliproteins (in ordinate) referred per gram of dried algal biomass. From this representation it can be deduced that there is no correlation between the content of the two classes of protein metabolites and that both families show a high variability with a ratio of 4÷5 times between the maximum and minimum contents measured.

### Example 4: Kinetics of the hydrolysis, by selective peptidases, on the oligopeptides in the extracts.

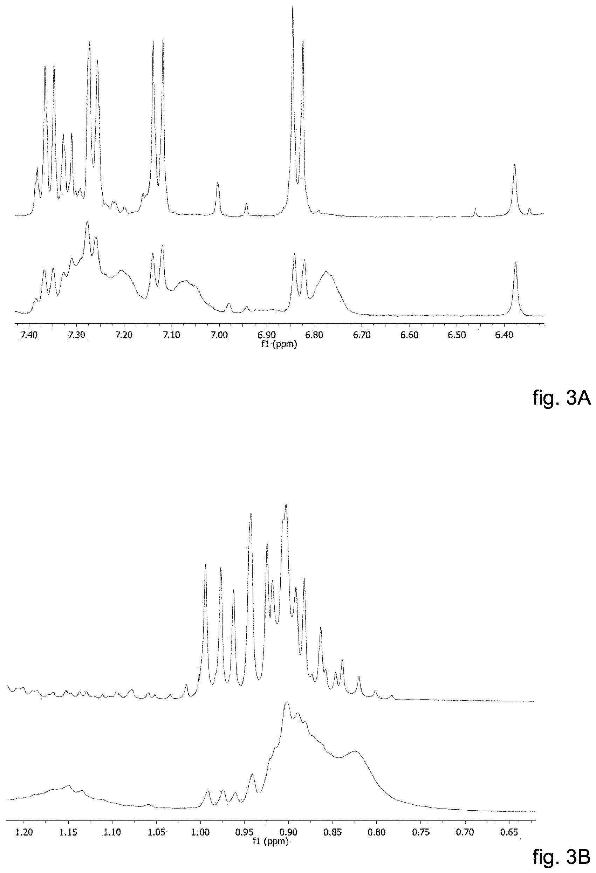

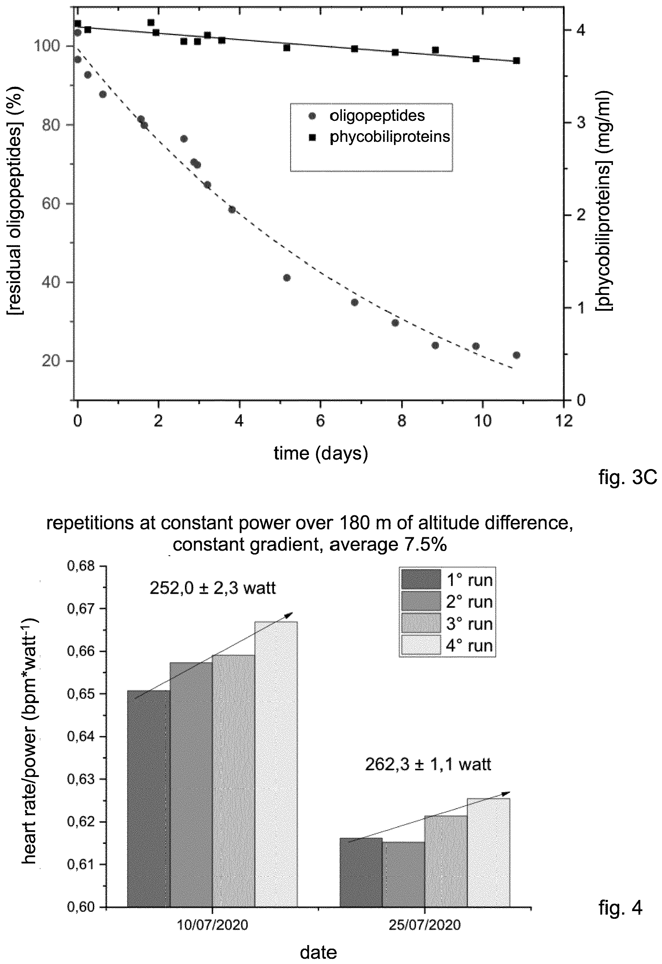

1.00 g of commercial dried spirulina powder was finely cold ground, in a mortar, subsequently rehydrated with 3.00 ml of deionized water for 30 minutes at 25°C and the resulting biomass was frozen at -20°C. The following day the swollen alga was thawed at a.t. and mechanically dispersed with 21.00 ml of an aqueous solution containing 0.3% NaCl and 0.065% NaN₃ and maintained at 42°C for 2 hours. At the end, the suspension was separated by means of centrifugation and the supernatant was incubated at 30°C, maintaining a continuous magnetic agitation, for a total of 11 days. During this period, aliquots of 500 µl were taken at regular intervals. Each aliquot, added with 200 µl of D2O, was analyzed by means of a Bruker AVANCE 400 MHz NMR spectrometer using a water signal suppression sequence. The integrals of the signals relating to the oligopeptides were measured according to the previously described method. These same aliquots were subsequently analyzed by means of spectrophotometry in order to determine the content in phycobiliproteins. Figs.3a and 3b show two spectral regions relating to the aromatic signals of Tyr and Pha and to the methyls of the branched-chain amino acids (Val, Leu and Ile), respectively, at time zero (below) and at end kinetics (above). The effect of enzymatic digestion is manifested by the conversion of broad signals, typical of peptide forms, into the individual free amino acids that constituted them. In particular, fig. 3b demonstrates that the content in oligopeptides in the extracts decreases over time due to the action of enzymatic digestion by the proteases naturally contained in the spirulina. The limitation in the duration of the extraction step and, in general, in the duration of the preservation of the extract in aqueous solution, therefore constitutes a process constraint aimed at preserving the integrity of the active ingredients. Advantageously, the step of extraction according to the present invention is therefore carried out for a period of time not exceeding 4 hours, in particular not exceeding 3 hours, more in particular not exceeding 2 hours. Fig. 3c shows the trend of the content in oligopeptides and in total phycobiliproteins over time. The titer of the former drops by 80% compared to the initial value after 11 days, while the phycobiliproteins show a slight denaturation of approximately 9% in the same time interval. The difference in effects on the two classes of oligopeptides present in the spirulina extracts reveals a selectivity of action of the protease(s) toward the oligopeptides.

In parallel, a second extract was prepared with the same alga sampling and under the same experimental conditions and the supernatant, this time, was first filtered on a membrane with porosity 0.45 µm and then, in asepsis, through a sterile filter with porosity 0.22 µm. The entire solution was incubated together with the previous one but remained sealed for 11 days. Only at the end the solution was sampled and subjected to NMR analysis, as for the individual samples of the first extract. The degree of degradation of the oligopeptides into free amino acids proved to be superimposable/similar to that measured in the first extract. The comparison between the two extracts demonstrates that the degradation of the oligopeptides occurs by endogenous proteases and not by means of fermentation by external microorganisms.

Example 4 is therefore provided here for demonstrative purposes, in order to highlight the damaging effect of an excessively long extraction step, for example of 11 days, unlike the extraction step of the present invention, and in general of the operating steps to achieve the stabilized extract, which are much shorter.

### Example 5: preparation of the orodispersible powder/granulate as a supplement

6.00 g of dried spirulina powder were weighed into a 250 ml Pyrex glass bottle; 18.00 ml of deionized water were added, and the powder was left to swell for 30' at 26°C. At the end, the macerate was mechanically dispersed after the addition of 103 ml of a solution of 0.3% NaCl, preheated to 45°C, and maintained at 42°C for 2 hours under vigorous mechanical agitation. At the end, 15 g of saccharose syrup (65% w/w sugar) containing soy lecithin (3% w/w) were added and the agitation was maintained for 10 minutes. Then, 164 g of maltodextrin (or a mixture of excipients commonly used in nutraceutical formulations) and a flavoring agent were added, and the suspension thus obtained was dried by means of lyophilization. Alternatively, the low temperature spraydrying technique, or other commonly used techniques for obtaining granulates, can be used for drying. The orodispersible granulate was packaged in 2.0 g single-dose sachets. 100 g of final solid formulation contain 91.6 g of maltodextrin, 4.65 g of saccharose, 3.35 g of algal biomass, 0.2 g of lecithin, 0.2 g of NaCl, 402 mg of total phycobiliproteins, 117 µmol of oligopeptides with a MW lower than 2.5 KDa (expressed in bound Tyr measured by means of the NMR method).

### Example 6: preparation of the syrup as a supplement

3.00 g of dried spirulina powder were weighed into a 100 ml Pyrex glass bottle; 9.00 ml of deionized water were added, and the powder was left to swell for 30' at 25°C, then the bottle was frozen at -20°C for at least 4 hours. The macerate was thawed, mechanically dispersed in 63 ml of a solution of 0.3% NaCl and maintained at 40°C for 2 hours. The water-soluble extract (fraction A) was separated from the insoluble alga fragments (fraction B) by means of centrifugation. 6.3 g of a saccharose syrup at 65% containing 3.1% of soy lecithin were added to fraction A, with the aim of facilitating the acid precipitation of the phycobiliproteins, preserving them from denaturation. The phycobiliproteins were precipitated by adding 303 mg of citric acid dissolved in water. The aggregated proteins (fraction C) were separated from the supernatant rich in oligopeptides (fraction D) by means of centrifugation. This solution was neutralized up to pH=7.0 with 10N NaOH and subsequently used to disperse the fraction B of the insoluble fragments of the alga. The suspension was maintained under vigorous mechanical agitation and subsequently added with 100.1 g of solid saccharose. The agitation was maintained first for 30' at a.t. followed by overheating up to 70°C, and the heating was maintained for 60 minutes in order to fragment the alga particles up to a very fine granulometry, so as to then allow to cool at a.t. Separately, fraction C was first neutralized by adding 460 mg of trisodium citrate dihydrate dissolved in water and then diluted with 16.3 g of glycerin. It was left under gentle mechanical agitation until the phycobiliproteins were dissolved and, subsequently, it was joined to the suspension of the other algal fractions, once cooled. The formulation of the syrup was completed by adding another 15.6 g of glycerin and 3 drops of essential oil of mint; a total of 216 g of syrup were obtained.

100 g of formulation contain: 48.66 g of saccharose, 36.31 g of water, 15.03 g of glycerin, 1.39 g of algal biomass, 135 mg of total phycobiliproteins (of which 86 mg phycocyanin-C, 37 mg phycocyanin-A and 12 mg of phycoerythrin) and 42 µmoles of bound Tyr in oligopeptides.

### Example 7: evaluation of effectiveness as a supplement for support sports activity (fig. 4)

A 47-year-old male volunteer, who practices road cycling at an amateur level, took a syrup based on spirulina extract titrated according to the present description, in particular obtained as in example 6, as a dietary supplement in a varied and balanced food regimen. The syrup had a content in phycobiliproteins equal to 7.1 mg per daily dose and a content in oligopeptides equal to 2.5 µmoles per daily dose expressed in bound Tyr. The syrup was taken in the daily dose of 1 teaspoon equal to 4.5 g of formulation, on average, and two teaspoons equal to 9.0 g on the day in which the training session took place. The subject only took a standard fluid-electrolyte supplement based on potassium and magnesium salts during the training phase and no other product to support sports activity. The test reported here evaluates the comparison of the parameters recorded in two training sessions held 15 days apart, one before the subject started to use the supplement and the second, in July 2020, after the subject had taken the syrup for ten days in the presence of comparable climatic conditions and in a period with constant training intensity. The training sessions were monitored with the recording of parameters by means of a Garmin model EDGE 520 computer associated with power, cadence, speed and heart rate sensors. The elevation was determined by combining a barometric sensor and GPS position detection. The recordings of the parameters, at the end of the training, were displayed by means of Garmin Training Center software and the data processing was carried out using Excel and OriginPro 2018. After a warm-up phase, each training session consisted of the consecutive repetition of the same climb for four times; the route provided a constant 7.5% gradient on a 180m altitude difference, and it was performed keeping the effort constant by monitoring the instantaneous power. From the data recorded on each uphill run, the average heart rate under exertion and the average value of the applied power were obtained. Fig. 4 shows the ratio between heart rate and power, to highlight the increase in muscular effort, with the same power, which was recorded with the increase in the degree of fatigue. In the session of 25/07/20, the average power maintained on the four repetitions was slightly higher (262.3 ± 1.1 watts) compared to the training session of 10/07/20 (252.0 ± 2.3 watts); however, the heart rates recorded were significantly lower and also showed a smaller increase between the first and fourth repetitions, indicating a greater resistance to the accumulation of fatigue.

The following examples 8 and 9 are useful for understanding the comparative effects on the support of sports activity in periods of time before, after and during the use of syrups based on spirulina extract according to the present invention (even with different contents of oligopeptides with low molecular weight, that is, lower than 2500 Dalton).

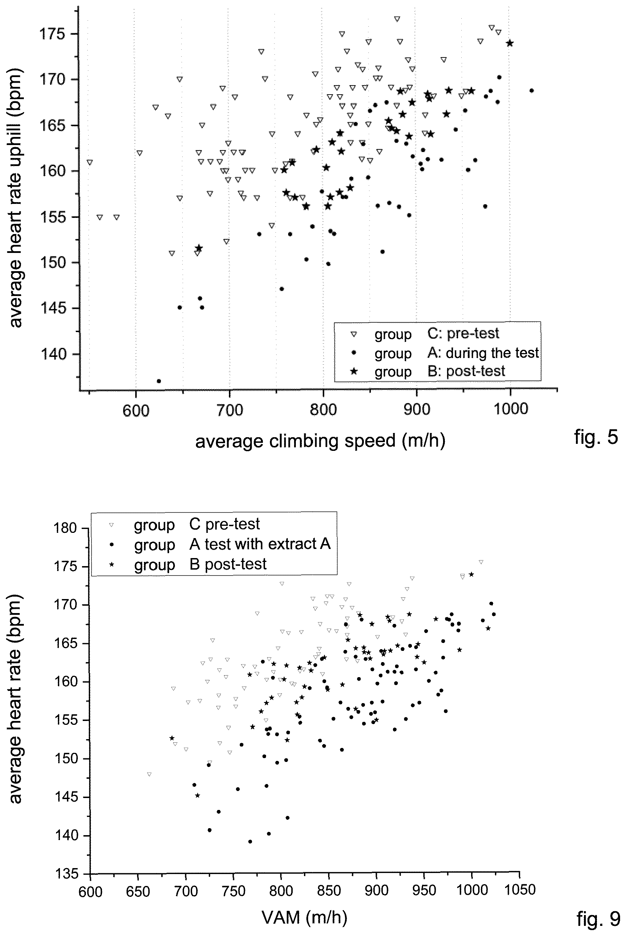

For examples 8 and 9, four data groups A, B, C, D were defined, generating respective VAM vs cardio graphs (figs. 5, 9 for example 8, and fig. 10 for example 9).

The data groups A, B, C, D are defined as:
Group A): data collected during the periods of use of supplements based on spirulina extract according to the present invention (referred to as extract A and
obtained as in example 6) containing a high quantity both of oligopeptides with a molecular weight lower than 2500 Dalton (2.1÷2.7 µmoles per daily dose) and also of phycobiliproteins (6.5÷7.5 mg per daily dose);
Group B): data relating to the training sessions conducted during the course of the two months immediately following the suspension of the use of the supplement based on extract A;
Group C): data relating to the period prior to taking the supplement, in particular for a period of two years;
Group D): data collected during the period of use of supplements based on spirulina extract according to the present invention (referred to as extract D and obtained as in example 6) containing a low quantity of oligopeptides with a molecular weight lower than 2500 Dalton (0.3÷0.6 µmol per daily dose) and a titer of phycobiliproteins (6.7÷7.4 mg per daily dose) equivalent to extract A.

Since the formulations used for data groups A and D contain essentially the same quantity of phycobiliproteins per daily dose, the differences in sports performances observed, as explained in example 9, cannot be attributed to the action of the phycobiliproteins alone but to the different dosage of the oligopeptides with low molecular weight which clearly distinguishes the extracts A and D used.

### Example 8: evaluation of effectiveness as a supplement for support sports activity (figs.5 and 9)

The efficacy assessment was also carried out by analyzing the parameters recorded during the course of the training sessions over a long period. A 52-year-old male volunteer, who practices road cycling at an amateur level, took a syrup based on spirulina extract titrated according to the present description, in particular obtained as in example 6, as a dietary supplement in a varied and balanced food regimen. The syrup used in example 8, based on extract A, had a content in phycobiliproteins equal to 6.5÷7.5 mg per daily dose and a content in oligopeptides with a molecular weight lower than 2500 Dalton equal to 2.1÷2.7 µmoles per daily dose expressed in bound Tyr. The subject in question maintained a constant body weight of 68 ± 1 kg over the course of the 4 years to which the observations collected in this study refer. The syrup was taken in a dose of 1 teaspoon equal to 4.5 g of formulate daily, and two teaspoons equal to 9.0 g on the day in which the training session took place, for a continuous period of 8 weeks followed by at least another 8 weeks off before a new cycle of use was started. The subject only took a standard fluid-electrolyte supplement based on potassium and magnesium salts during the training phase and no other product to support sports activity. The training sessions were held on a weekly basis, on variable routes, with an average length between 80 and 110 km and which provided one or more uphill segments and were held throughout the entire year. In the days between two cycling training sessions, no other significant sports activities were carried out. The training sessions were monitored by recording the parameters using a Garming model EDGE 500 computer associated with cadence, speed and heart rate sensors. The elevation was determined by combining a barometric sensor and GPS position detection. The recordings of the parameters, at the end of the training, were displayed by means of Garmin Training Center software and the data processing was carried out using Excel and OriginPro 2018. The performances in outdoor training sessions are strongly influenced by environmental and climatic conditions, and the characteristics of the route. In order to compare the athletic performances between all the training sessions, only the parameters recorded on the uphill segments were taken into consideration, selecting the climbs that covered at least 150 m in altitude difference and had a "punctual" gradient greater than 3% and were typically characterized by average gradients between 6% and 10% over the entire segment. On these uphill segments, the muscular work is done, as a first approximation, entirely to carry out the work against the force of gravity, since the translational speed is very low and the relative friction is negligible. From the tracings of the Garmin parameters, the average climbing speed (VAM) was calculated as the ratio between the elevation difference covered and the time. The VAM on each climb can be related to the average heart rate which is an expression of the muscular effort made. Typically, as the effort that one chooses to maintain in order to achieve higher VAM increases, the average heart rate increases. Fig. 5 plots, on the abscissa and ordinate, this pair of parameters characterizing each climb. The data is divided into three groups: the first group (A) collects the data for the training session carried out during the period in which the supplement product was being taken; group B collects the data for the training sessions carried out over the course of the two months immediately following the suspension of the use of the supplement. Finally, group C collects the data relating to the periods prior to taking the syrup and not included in group B. In order to have a comparison of the performances between the training sessions of group A and those of group C, in comparable seasonal conditions, the data relating to the training sessions dating back to about two years prior to the start of the present test were inserted into group C. The dispersion of the points in the graph of fig. 5 is an expression of the environmental and seasonal variability which, however, concerns all three groups of data A, B and C. The effectiveness of the action of supplementation of the syrup under examination is highlighted by the distribution of the values of group A (solid circles) in a region that is on average lower than the points of group C (empty triangles). With the same VAM achieved, the muscle work intensity (expressed by the heart rate) in group A is on average lower than in group C. For this subject, it is interesting to note that the training sessions relating to the first week in which the syrup was taken show performances in line with the training sessions prior to the start of the test, an indication of the fact that the physiological effects are fully manifested after about 10 days of taking the product. The heart rates in the VAM range comprised between 750 and 850 m/h have an average value equal to 156.3±5.7 for group A and equal to 165.6±4.7 for group C; the heart rates recorded in the VAM range comprised between 850 and 950 m/h have an average value equal to 160.3±4.4 for group A and equal to 168.9±4.0 for group C. The values belonging to group B, on the other hand, show intermediate performances compared to the other two groups, an indication of the partial persistence of the physiological effects associated with the supplementation in the first period following the end of the test.

Fig. 9 in fact shows a graph similar to fig. 5 for the analysis of the parameters recorded over the course of further training sessions over a long period of time. The division of the data into three groups A, B and C is as described above with reference to fig. 5, and from the data of fig. 9 we also derive the effectiveness of the action of supplementation of the syrup under examination (based on extract A as described above) with a distribution of the values of group A (solid circles) in a region that is on average lower than the points of group C (empty triangles). Also in fig. 9, with the same VAM achieved, the muscle work intensity (expressed by the heart rate) in group A is on average lower than in group C. Also for the values belonging to group B there are intermediate performances compared to the other two groups, an indication of the partial persistence of the physiological effects associated with supplementation in the first period following the end of the test.

### Example 9: further evaluation of effectiveness as a supplement to support sports activity (fig. 10)

Fig. 10 shows a graph similar to figs.5 and 9, where however the data are relative to groups A, C and D.

The data were processed in a similar way to what was done in example 8 for figs.5 and 9.

In example 9, two syrups based on spirulina extract titrated according to the present description were taken, in particular obtained as in example 6, as a dietary supplement in a varied and balanced food regimen. A syrup used in example 9 was based on extract A as described above in example 8 (data of group A in fig. 10), while a second syrup, based on extract D, had a content in phycobiliproteins equal to 6.7÷7.4 mg per daily dose and a content in oligopeptides with a molecular weight lower than 2500 Dalton equal to 0.3÷0.6 µmoles per daily dose expressed in bound Tyr (data of group D in fig. 10).

Example 9 is useful to demonstrate in a comparative way that, with the same content of phycobiliproteins per daily dose, the extract A with a greater content of oligopeptides with a molecular weight lower than 2500 Dalton per daily dose is more effective in the action of supplementing and supporting sports activity compared to the extract D with a lower content of oligopeptides with a molecular weight lower than 2500 Dalton per daily dose, as evident from fig. 10.

In particular, fig. 10 confirms a distribution of the values of group A (solid circles) in a region that is on average lower than the points of group C (empty triangles). Also in fig. 10, with the same VAM achieved, the muscle work intensity (expressed by the heart rate) in group A is on average lower than in group C. For the values belonging to group D (semi-solid circles), the performances are more comparable to, and overlapping with, those of group C, therefore in a zone higher compared to group A, which is an indication of the greater effectiveness of extracts with a higher content of oligopeptides with a molecular weight lower than 2500 Dalton, with the same content of phycobiliproteins, such as extract A.

It is clear that modifications and/or additions of parts or steps may be made to the composition based on spirulina extract and to the corresponding preparation method as described heretofore, without departing from the field and scope of the present invention as defined by the claims.

## Claims

1. Composition based on spirulina extract comprising phycobiliproteins and a fraction of natural oligopeptides having a molecular weight lower than 2500 Dalton, wherein said phycobiliproteins and said natural oligopeptides are natively present in said spirulina, wherein the total content of said fraction of oligopeptides, referred to a quantity of bound Tyr contained in said fraction of oligopeptides and measured by means of the NMR method, is higher than 2.0 µmoles per daily dose administered.

2. Composition as in claim 1, wherein the total content of said fraction of oligopeptides, referred to the quantity of bound Tyr contained in the mixture and measured by means of the NMR method, is higher than 35 µmoles per 100 grams of said composition.

3. Composition as in claim 1 or 2, wherein said fraction of natural oligopeptides natively present in said spirulina having a molecular weight lower than 2500 Dalton comprises Tyr, Phe, Val, Leu, Ile, in molar ratio, respectively, 1:1:2:2:2.

4. Composition as in any claim from 1 to 3, said composition having a ratio between total phycobiliproteins and said fraction of natural oligopeptides natively present in said spirulina having a molecular weight lower than 2500 Dalton comprised in the range from 1:1 to 20:1 expressed in milligrams of phycobiliprotein on µmoles of bound Tyr measured by means of the NMR method, able to promote the synergy between the two classes of phytocompounds.

5. Composition as in any claim from 1 to 4, said composition also comprising vitamin D and/or other active substances and/or other botanical varieties or extracts thereof, whose action is complementary to or synergistic with said composition.

6. Composition as in any claim from 1 to 5, wherein the fraction of natural oligopeptides natively present in said spirulina having a molecular weight lower than 2500 Dalton is purified and constitutes at least 50% w/w with respect to the dry content of the algal metabolites present in said spirulina extract.

7. Composition as in any claim from 1 to 6, for medical use.

8. Composition as in any claim from 1 to 6, for one or more of the following uses:
- for food supplementation with a restorative, energizing, anti-hypertensive action, for support in states of psychophysical fatigue, for states of stress and exhaustion, for support in reducing recovery times after intense sport or work activity, to increase endurance to fatigue, to support sports activity in order to reduce muscle pain associated with inflammatory states, to limit the onset of cramps and lower heart rate under exertion, for support in accelerating recovery during convalescence, to improve mood and cognitive faculties, to reactivate the energy metabolism.

9. Composition as in any claim from 1 to 6, for one or more of the following uses:
- for food supplementation in order to improve the efficiency of the immune system, to counteract the effects of acute and chronic inflammatory states and manifestations associated with autoimmune diseases and acute manifestations of Herpes.

10. Composition as in any claim from 1 to 6, for one or more of the following uses:
- for nutraceutical, cosmetic, cosmeceutical, pharmaceutical and medical device formulations able to promote blood circulation, in particular peripheral, and to assist in the maintenance and/or restoration of the regular functionality of the cardiovascular system.

11. Composition as in any claim from 1 to 6, for use in food supplementation as an adjuvant in the control of glycemic metabolism;

12. Spirulina extract comprising phycobiliproteins and a fraction of natural oligopeptides having a molecular weight lower than 2500 Dalton, wherein said phycobiliproteins and said natural oligopeptides are natively present in said spirulina, wherein the total content of said fraction of oligopeptides, referred to a quantity of bound Tyr contained in said fraction of oligopeptides and measured by means of the NMR method, is higher than 2.0 µmoles per daily dose administered.

13. Method to prepare a composition based on stabilized spirulina extract, **characterized in that** it comprises: a) selection of the algal biomass of spirulina which provides titration of the oligopeptides and phycobiliproteins on the single batch, selecting the batches so that said algal biomass has an oligopeptide content higher than 25 µmol/g of dry biomass expressed in bound Tyr measured by means of the NMR method, and total phycobiliproteins content greater than 90 mg/g of dry biomass, wherein said phycobiliproteins and said natural oligopeptides are natively present in said spirulina; b) supply of spirulina raw material; c) optional grinding; d) optional rehydration; e) optional freezing; f) optional thawing; g) extraction carried out at a temperature not exceeding 45-50°C and for a period of time not exceeding 4 hours, in particular not exceeding 3 hours, more in particular not exceeding 2 hours; i) stabilization of the oligopeptides carried out within 3 hours of the extraction and by means of one of the following choices: freezing and/or drying with immobilization of the phytocompounds in the solid phase and removal of the water, lyophilization or heating for the purpose of inactivating the biological activity of the proteases present.

14. Method as in claim 13, **characterized in that** in the step b) of supplying the raw material, the spirulina is supplied in the choice of the following forms: A) dried in the form of flakes or extruded noodles; B) powder obtained by grinding the dried form A; C) frozen fresh biomass, not dried, with an average water content of 70% w/w.

15. Method as in claim 14, **characterized in that** if the form of the raw material is form "A" then the method also provides to carry out steps c), d), e) of grinding, rehydration, freezing and subsequent step f) thawing, if the form of the raw material is form "B" the method provides to carry out steps d), e) of rehydration, freezing and subsequent step f) thawing, without the previous step c) of grinding, while if the raw material is supplied in form "C" then the step f) of thawing is carried out directly, without the previous steps c), d), e) of grinding, rehydration, freezing.

16. Method as in any claim from 13 to 15, **characterized in that** if the step g) of extraction is carried out with a vigorous mechanical agitation such as to effectively fragment the micro-filaments of the alga and maximize the release of the oligopeptides in the liquid phase, then said method does not provide to carry out steps c), d), e), f) of grinding, rehydration, freezing and thawing.
